# EUROPEAN PATENT APPLICATION

(11) **EP 2 213 411 A1**
(43) Date of publication of application: **04.08.2010**
(21) Application number: 08848425.8
(22) Date of filing: 22.10.2008
(51) Int. Cl.: B23Q 11/00

(54) **AUTOMATIC CLEANING DEVICE FOR MACHINE TOOL**

(30) Priority: 09.11.2007 JP 2007291643
(71) Applicant: Mitsubishi Heavy Industries, Ltd., Tokyo 108-8215 (JP)
(72) Inventor: IMAMURA, Hiroyuki, Ritto-shi Shiga 520-3080 (JP); KUBO, Shunsuke, Ritto-shi Shiga 520-3080 (JP)
(74) Representative: Henkel, Feiler & Hänzel
(86) International application number: PCT/JP2008/069086
(87) International publication number: WO 2009/060714

(57) **Abstract**

An objective is to provide an automatic cleaning device for machine tool in which cleaning efficiency is improved by performing cleaning for a large range during machining. To achieve this, an air nozzle (21) that removes, by air-blowing, chips (Wa) and cutting oil (C) dispersed while a workpiece is being machined to an outside of the machine is allowed to move not only independently from a movement of a spindle head (16), but also relatively to a workpiece (W) in directions of three orthogonal axes.

## Description

### TECHNICAL FIELD

The present invention relates to an automatic cleaning device for machine tool for removing chips dispersed around a workpiece during machining.

### BACKGROUND ART

When a workpiece is machined in a machine tool, a large amount of chips are produced from the workpiece. If these chips deposit on or attach to a surface of the workpiece, a machined hole, or the like, the workpiece or a tool may be damaged. Moreover, if the chips disperse over a table on which the workpiece is fixed, positioning accuracy of a workpiece jig attached to the table or of the table per se may be affected. Since the finished workpiece has to be shipped after being cleaned of course, not only the chips but also cutting oil deposited or attached has to be removed.

Thus, a conventional machine tool is provided with an automatic cleaning device that automatically removes chips dispersed on and around a workpiece. Such conventional automatic cleaning device for machine tool is described in Patent Literatures 1 and 2, for example.

[Patent Literature 1] Japanese Patent No. 3705999
[Patent Literature 2] Japanese Patent Application Publication No. Hei 10-180585

### DISCLOSURE OF THE INVENTION

### PROBLEMS TO BE SOLVED BY THE INVENTION

In the structure of Patent Literature 1, machining and cleaning are separated from each other so that chips can be cleaned simultaneously with the machining. However, since cross rails support both of a spindle head and a cleaning robot, the cleaning range of the cleaning robot during machining is limited. Moreover, employment of such support structure causes vibrations generated by an operation of the cleaning robot to be transmitted to the spindle head during machining, and therefore may lower the accuracy in machining the workpiece. In addition, the cleaning robot moves a chip-sucking nozzle by rotationally moving multiple arms; therefore, each arm needs a drive source of its own. This not only complicates the structure, but also complicates control for operating the robot.

Like Patent Literature 1, in the structure of Patent Literature 2, machining and cleaning are separated from each other so that chips can be cleaned simultaneously with the machining. However, a swarf removal unit that sprays a pressurized fluid toward the chips moves only in one direction, and therefore the cleaning range is limited.

The present invention is made to solve the above problems, and has an objective to provide an automatic cleaning device for machine tool in which cleaning efficiency can be improved by performing cleaning for a large range simultaneously with machining.

### MEANS FOR SOLVING THE PROBLEMS

An automatic cleaning device for machine tool according to the present invention, which solves the above problems, is characterized by comprising: removal means for removing a chip and a coolant dispersed while a workpiece is machined, to an outside of the machine; and moving means for moving the removal means not only independently from a movement of a rotary tool that machines the workpiece, but also relatively to the workpiece in directions of three orthogonal axes.

The automatic cleaning device for machine tool according to the present invention, which solves the above problems, is **characterized in that** the removal means is an air nozzle that sprays air, and includes posture control means for controlling a posture of the air nozzle.

The automatic cleaning device for machine tool according to the present invention, which solves the above problems, is **characterized in that** a machining program for controlling a movement of the rotary tool and a cleaning program for controlling a movement of the removal means performed by the moving means are set separately from each other.

### EFFECTS OF THE INVENTION

Accordingly, in the automatic cleaning device for machine tool according to the present invention, the removal means can move not only independently from the movement of the rotary tool that machines a workpiece, but also relatively to the workpiece in directions of three orthogonal axes. This allows cleaning to be performed for a large range simultaneously with machining, and therefore allows cleaning efficiency to be improved.

### BRIEF DESCRIPTION OF THE DRAWINGS

[Fig. 1] Fig. 1 is a side view of an automatic cleaning device for machine tool according to an embodiment of the present invention.
[Fig. 2] Fig. 2 is a front view of the automatic cleaning device for machine tool according to the embodiment of the present invention.

### BEST MODE FOR CARRYING OUT THE INVENTION

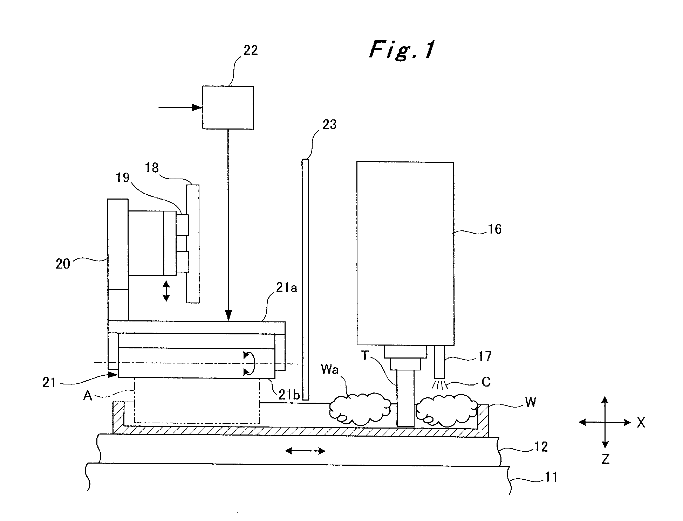

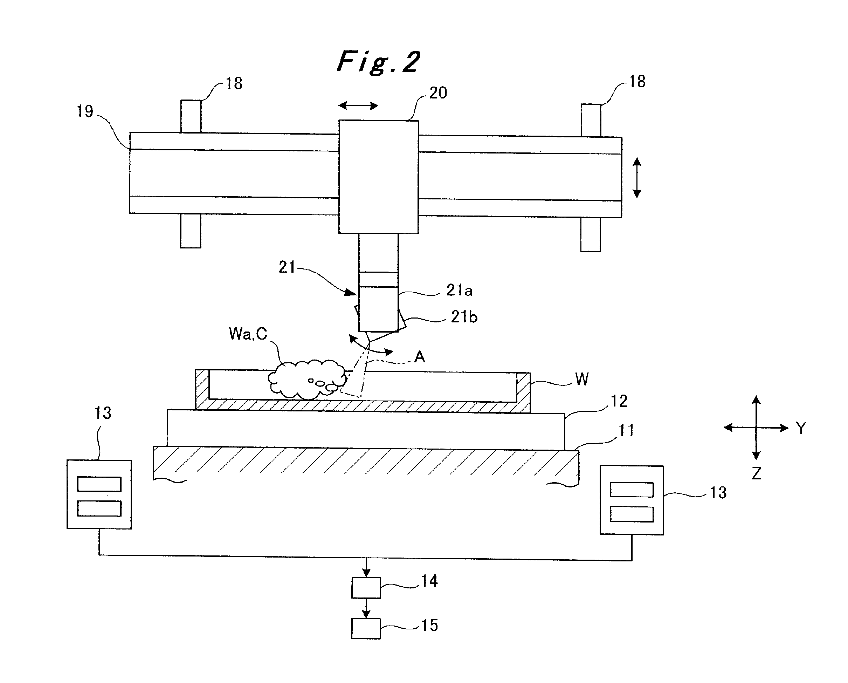

An automatic cleaning device for machine tool according to the present invention will be described in detail below using the drawings. Fig. 1 is a side view of an automatic cleaning device for machine tool according to an embodiment of the present invention. Fig. 2 is a front view of the automatic cleaning device for machine tool according to the embodiment of the present invention. Note that an X-axis direction, a Y-axis direction, and a Z-axis direction shown in the drawings indicate directions of three orthogonal axes, and indicate a machine feed direction, a machine width direction, and a vertical direction, respectively.

As Figs. 1 and 2 show, a machine tool (not shown) which is a portal machining center has a bed 11 on which a table 12 is supported while being allowed to move in the X-axis direction. A workpiece (a piece of work being machined) W is attached detachably to a top surface of the table 12 with an attachment jig (not shown). In addition, chip conveyers 13 are provided on both sides of the bed 11 in the Y-axis direction while being allowed to travel in the X-axis direction. A chip box 14 and a cutting-oil recovery box 15 are provided downstream in the travel direction of the chip conveyers 13.

Further, the machine tool is provided with a spindle head 16 which is supported while being allowed to move relative to the bed 11 in the X-axis, Y-axis, and Z-axis directions. A tool (rotary tool) T is rotatably and detachably mounted on a tip of the spindle head 16. A cutting-oil spray nozzle 17 is provided to a portion of the spindle head 16, the portion being near the mounted tool T. The cutting-oil spray nozzle 17 is connected to a cutting-oil supply device (not shown). Specifically, the cutting-oil supply device is configured to supply cutting oil (a coolant) C to the cutting-oil spray nozzle 17. A cutting-oil amount and a spray pressure of the cutting oil C sprayed through the cutting-oil spray nozzle 17 are adjusted to predetermined values by the cutting-oil supply device.

Further, guide members 18 are supported by the bed 11 through a support member (not shown), independently from the table 12. The guide members 18 extend in the Z-axis direction. A guide rail 19 is supported by front faces of the guide members 18 while being allowed to slide in the Z-axis direction. Further, the guide rail 19 extends in the Y-axis direction, and a nozzle head 20 is supported by a front face of the guide rail 19 while being allowed to slide in the Y-axis direction. Note that the guide members 18, the guide rail 19, and a nozzle head 20 constitute moving means.

An air nozzle (removal means) 21 is supported by a tip of the nozzle head 20. The air nozzle 21 includes a nozzle support member 21a and a nozzle body 21b (posture control means). The nozzle support member 21a is supported, at its one end, by the nozzle head 20, and the nozzle body 21b is supported between vertical walls of the nozzle support member 21 while being allowed to rotate about the X axis. In other words, a spray angle of the air nozzle 21 is adjustable. A high-pressure blower 22 is connected to the air nozzle 21, and air A sucked in by the high-pressure blower 22 is sprayed from the air nozzle 21.

Moreover, a partition wall 23 is supported by the support member. The partition wall 23 is placed between the spindle head 16 and the air nozzle 20. Accordingly, the partition wall 23 divides an area into a work area on the spindle head 16 side and a cleaning area on the air nozzle 21 side.

Accordingly, the workpiece W is machined into a predetermined shape by moving the spindle head 16 in the X-axis, Y-axis, and Z-axis directions, and also by rotating the tool T mounted on the tip of the spindle head 16. During this machining, the cutting-oil spray nozzle 17 sprays the cutting oil C toward the tool T and a location where the workpiece is being machined by the tool T, to cool the tool T and the workpiece W and to reduce cutting resistance.

The machining of the workpiece W produces chips Wa from the workpieces W. The chips Wa disperse together with the cutting oil C on a surface of the workpiece W and on a surface of the table 12. Air blowing by the air nozzle 21 removes the chips Wa and cutting oil C thus dispersed and deposited or attached.

In sum, the air nozzle 21 is moved in the Y-axis and Z-axis directions by moving the guide rail 19 and the nozzle head 20 along with the movement of the table 12 in the X-axis direction during the machining. Furthermore, the rotation position (posture) of the air nozzle 21 is controlled to adjust the spray angle of the air nozzle 21. Thereby, the chips Wa and the cutting oil C deposited on or attached to the workpiece W and the table 12 are dumped on the chip conveyers 13 and transferred by the chip conveyers 13. Next, the chips Wa and the cutting oil C transferred by the chip conveyers 13 pass through the chip box 14 where the chips Wa are removed, and then through the cutting-oil recovery box 15 where the rest, namely the cutting oil C, is recovered.

Here, since the spindle head 16 and the air nozzle 21 are supported separately, the machining by the tool T and the air blowing by the air nozzle 21 are performed simultaneously. More precisely, to prevent interference between the machining operations and the cleaning operations, a machining program for controlling the movement of the spindle head 16 and a cleaning program for performing the movement control and the rotation control (posture control) of the air nozzle 21 are set separately from each other. Note that the provision of the partition wall 23 prevents the produced chips Wa and the sprayed cutting oil C from entering the cleaning area, and also prevents the chips Wa and the cutting oil C air-blown by the air nozzle 21 from entering the machining area.

In the embodiment, the air nozzle 21 is supported while being allowed to move in the Y-axis and the Z-axis directions. Note, however, that the air nozzle 21 may be allowed to move in the X-axis direction as well. Such structure further improves cleaning efficiency.

Accordingly, in the automatic cleaning device for machine tool according to the present invention, the air nozzle 21 is allowed to move independent of the movement of the spindle head 16, and to move relative to the workpiece W in the directions of three orthogonal axes. Thereby, the air nozzle 21 can be moved according to deposition (attachment) amounts and deposition (attachment) positions of the chips Wa and the cutting oil C. This consequently allows cleaning to be performed for a large range during the machining, and therefore improves cleaning efficiency. In addition, since the nozzle body 21b of the air nozzle 21 is supported while being allowed to rotate about the X axis, the posture of the nozzle body 21b is adjustable. This allows the chips Wa and the cutting oil C to be dumped on the chip conveyers 13 reliably. Further, the moving speed and the rotation speed of the air nozzle 21 can be changed to further improve cleaning efficiency. Moreover, it is less likely that vibrations generated by the movement and rotation of the air nozzle 21 are transmitted to the spindle head 16. Thus, machining accuracy can be improved.

### INDUSTRIAL APPLICABILITY

The present invention is applicable to a machine tool capable of a long-time, unattended operation.

## Claims

1. An automatic cleaning device for machine tool, **characterized by** comprising:
removal means for removing a chip and a coolant dispersed while a workpiece is machined, to an outside of the machine; and
moving means for moving the removal means not only independently from a movement of a rotary tool that machines the workpiece, but also relatively to the workpiece in directions of three orthogonal axes.

2. The automatic cleaning device for machine tool according to claim 1, **characterized in that** the removal means is an air nozzle that sprays air, and includes posture control means for controlling a posture of the air nozzle.

3. The automatic cleaning device for machine tool according to claim 1, **characterized in that** a machining program for controlling a movement of the rotary tool and a cleaning program for controlling a movement of the removal means performed by the moving means are set separately from each other.
